(19) Europäisches Patentamt
European Patent Office
Office européen des brevets

(11) **EP 2 783 489 B1**

(12) **EUROPEAN PATENT SPECIFICATION**

(45) Date of publication and mention
of the grant of the patent:
**31.10.2018 Bulletin 2018/44**

(21) Application number: **12810297.7**

(22) Date of filing: **21.12.2012**

(51) Int Cl.:
***H04L 12/863*** *(2013.01)*

(86) International application number:
**PCT/EP2012/076641**

(87) International publication number:
**WO 2014/094873 (26.06.2014 Gazette 2014/26)**

(54) **AN APPARATUS AND A METHOD FOR PROVIDING A RANDOM EARLY DETECTION IN A PACKET SWITCHED NETWORK**

VORRICHTUNG UND VERFAHREN ZUR BEREITSTELLUNG EINER ZUFÄLLIGEN FRÜHEN DETEKTION IN EINEM PAKETVERMITTELTEN NETZWERK

APPAREIL ET PROCÉDÉ POUR EFFECTUER LA DÉTECTION ALÉATOIRE PRÉCOCE DANS UN RÉSEAU À COMMUTATION DE PAQUETS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.10.2014 Bulletin 2014/40**

(73) Proprietor: **Huawei Technologies Co., Ltd.**
**Longgang District**
**Shenzhen, Guangdong 518129 (CN)**

(72) Inventor: **HADAR, Ronen**
**80992 München (DE)**

(74) Representative: **Kreuz, Georg Maria**
**Huawei Technologies Duesseldorf GmbH**
**Riesstraße 25**
**80992 München (DE)**

(56) References cited:
**US-A1- 2004 252 678    US-B1- 6 842 429**
**US-B1- 7 558 197**

**Description**

TECHNICAL FIELD

The application relates to an apparatus and a method for providing a random early detection in a packet switched network.

BACKGROUND

A random early detection, RED, is a mechanism to avoid traffic congestion in a packet switched network. The conventional random early detection mechanism, also known as random early discard or random early drop mechanism, is an active queue management algorithm. With the random early detection mechanism data can be dropped randomly prior to a congestion build-up. The probability for a packet drop is increased as data congestion gets higher. The random early detection mechanism can monitor an average queue size, AQS, and drop data packets based on statistical probabilities. For example, if a buffer is almost empty all incoming data packets are accepted. As the queue, Q, of data packets in the buffer grows the probability for dropping an incoming data packet is also increased. If the buffer is full the probability becomes 100% and all incoming data packets are dropped. The average queue size, AQS, is recalculated for every received data packet. However, in a conventional random early detection mechanism of a packet switched network the calculation of the average queue size, AQS, takes into account only an input function of the received data but not an output function, i.e. the conventional random early detection mechanism only takes into account the enqueuing of incoming data packets in the queue, Q, but not dequeue of data packets from the respective queue. Consequently, the conventional random early detection method used in a packet switched network does only show a limited ability to predict data congestion and to avoid such data congestion in the network.

Accordingly, there is a need to provide an apparatus and a method able to predict data congestion in a packet switched network accurately and to provide a better data congestion avoidance.

US7558197B1 discloses a system and the system provides congestion control in a network device. The system includes multiple queues, a dequeue engine, a drop engine, and an arbiter. The queues temporarily store data. The dequeue engine selects a first one of the queues and dequeues data from the first queue. The drop engine selects a second one of the queues to examine and selectively drop data from the second queue. The arbiter controls selection of the queues by the dequeue engine and the drop engine.

SUMMARY

The present invention provides as a first aspect an apparatus for providing a random early detection in a packet switched network, said apparatus comprising:

- a dequeue counter which is incremented upon each dequeue of a data packet from a queue, Q, and which is reset upon each enqueue of a data packet into said queue, Q;
- a coefficient memory table, CMT, which stores plurality of decay coefficients, C; and
- a calculation unit which is adapted to calculate upon each enqueue of a data packet in said queue, Q, an average queue size, AQS, of said queue, Q, depending on a decay coefficient, C, wherein the decay coefficient is read from a memory address of said coefficient memory table, CMT, to which said dequeue counter points before said dequeue counter is reset.

In a first possible implementation of the apparatus according to the first aspect of the present invention said calculation unit is adapted to compare the calculated average queue size, AQS, of said queue, Q, with a maximum threshold value and a minimum threshold value.

In a further second implementation of the first implementation of said apparatus according to the first aspect of the present invention the calculation unit is adapted to drop a received data packet if the average queue size, AQS, exceeds the maximum threshold value.

In a further third implementation of the first or second implementation of the apparatus for providing a random early detection in a packet switched network according to the first aspect of the present invention, the calculation unit is adapted to enqueue the received data packet if the average queue size, AQS, is lower than the minimum threshold value.

In a further fourth implementation of any of the first to third implementation of the apparatus for providing a random early detection in a packet switched network according to the first aspect of the present invention, the calculation unit is adapted to drop the received data packet randomly if the calculated average queue size, AQS, is between the minimum threshold value and the maximum threshold value.

In a further fifth implementation of the fourth implementation of the apparatus for providing a random early detection in a packet switched network according to the first aspect of the present invention, the received data packets are dropped randomly with a different drop probability per traffic priority if the calculated average queue size, AQS, is between the minimum threshold value and the maximum threshold value.

In a sixth implementation of any of the first to fifth implementation of the apparatus for providing a random early detection in a packet switched network according to the first aspect of the present invention, the calculation unit is adapted to calculate the average queue size, AQS, as follows:

```
[Curr AQS - Queue Size Diff] x C + Queue Size Diff,
```

wherein Curr AQS is the current average queue size, AQS,
wherein Queue Size Diff is a queue size difference,
wherein Queue Size Diff = (Prev Queue Size - Curr Queue Size)/2,
wherein Prev Queue Size is the previously calculated queue size of said queue, Q,
Curr Queue Size is the currently calculated queue size of said queue, Q,
C is the decay coefficient read from the coefficient memory table, CMT, depending on the pointer value of the dequeue counter of said queue, Q.

In a further seventh implementation of the sixth implementation of the apparatus for providing a random early detection in a packet switched network according to the first aspect of the present invention, the decay coefficients, C, are decay coefficients.

In an eighth implementation of the seventh implementation of the apparatus for providing a random early detection in a packet switched network according to the first aspect of the present invention the precalculated decay coefficients are coefficients of an exponential decay function stored in the coefficient memory table, CMT.

In a possible ninth implementation of any of the seventh or eighth implementation of the apparatus for providing a random early detection in a packet switched network according to the first aspect of the present invention the calculation unit is adapted to calculate in advance the decay coefficients, C, of said exponential decay function as follows:

$$x[i+1]=x[i]x(N-W)/N$$

$$C[i+1]=(x[i+1]-x[0])/x[0]$$

wherein x[0] is an arbitrary number, N, W are arbitrary numbers (W<N) and i is a variable.

In a possible tenth implementation of the ninth implementation of the apparatus for providing a random early detection in a packet switched network according to the first aspect of the present invention
x[0] is set to 100,
W is set to 1,
N is set to 256.

The invention further provides as a second aspect a method for providing a random early detection in a packet switched network comprising the steps of:

- incrementing a dequeue counter upon each dequeue of a data packet from a queue, Q, and resetting said dequeue counter upon each enqueue of a data packet in said queue, Q; and
- calculating upon each enqueue of a data packet in said queue, Q, an average queue size, AQS, of said queue, Q, depending on a decay coefficient, C, the decay coefficient is read from a memory address of a coefficient memory table, CMT, to which said dequeue counter points before the dequeue counter is reset.

In a first possible implementation of the method for providing a random early detection in a packet switched network according to the second aspect of the present invention, the method further comprises comparing said calculated average queue size, AQS, of said queue, Q, with a maximum threshold value and a minimum threshold value.

In a possible second implementation of the first implementation of the method for providing a random early detection in a packet switched network according to the second aspect of the present invention, the method further comprises dropping a received data packet if the calculated average queue size, AQS, exceeds the maximum threshold value.

In a further possible third implementation of the first or second implementation of the method for providing a random early detection in a packet switched network according to the second aspect of the present invention, the method further comprises enqueuing the received data packet if the calculated average queue size, AQS, is lower than the minimum threshold value.

In a further possible fourth implementation of any of the first to third implementation of the method for providing a random early detection in a packet switched network according to the second aspect of the present invention, the method further comprises dropping randomly the received data packet if the calculated average queue size, AQS, is between the minimum threshold value and the maximum threshold value.

In a further possible fifth implementation of the method for providing a random early detection in a packet switched network according to the second aspect of the present invention, the dropping randomly (S10) the received data packet comprises dropped randomly the received data packets (S10) with a different drop probability per traffic priority.

In a further possible sixth implementation of the method for providing a random early detection in a packet switched network according to the second aspect of the present invention, the method further comprises calculating the average queue size, AQS, of said queue, Q, depending on a decay coefficient, C, as follows:

$$[\text{Curr AQS} - \text{Queue Size Diff}] \times C + \text{Queue Size Diff},$$

wherein Curr AQS is the current average queue size, AQS,
wherein Queue Size Diff is the queue size difference,
wherein Queue Size Diff = (Prev Queue Size - Curr Queue Size)/2,
wherein Prev Queue Size is the previously calculated queue size of said queue, Q,
Curr Queue Size is the currently calculated queue size and
C is a decay coefficient read from the coefficient memory table,
CMT, depending on the pointer value of the dequeue counter of said queue, Q.

In a further possible seventh implementation of any of the first to sixth implementation of the method for providing a random early detection in a packet switched network according to the second aspect of the present invention the decay coefficients, C, are precalculated decay coefficients.

In a further possible eighth implementation of the seventh implementation of the method for providing a random early detection in a packet switched network according to the second aspect of the present invention the precalculated decay coefficients are decay coefficients of an exponential decay function stored in said coefficient memory table, CMT.

In a further possible ninth implementation of the method for providing a random early detection in a packet switched network according to the second aspect of the present invention, the method further comprises calculating in advance the decay coefficients, C, of said exponential decay function as follows:

$$x[i+1] = x[i] \times (N-W)/N$$

$$C[i+1] = (x[i+1] - x[0])/x[0]$$

wherein x[0] is an arbitrary number,
wherein N, W are arbitrary numbers (W<N) and i is a variable.

According to a third aspect of the present invention, an alternative apparatus for providing a random early detection in a packet switched network is provided. The apparatus comprises a processor for performing the method according to the second aspect as such or any of the preceding first to ninth implementation forms of the second aspect.

The invention further provides as a fourth aspect a packet switched network comprising an apparatus according to the first aspect of the present invention as such or according to any preceding first to tenth implementation forms of the firs aspect, or according to the third aspect of the present invention as such.

In a possible implementation of the packet switched network according to the fourth aspect of the present invention the network comprises the internet.

According to a fifth aspect, the invention can be implemented in digital electronic circuitry, or in computer hardware, firmware, computer software, or in combinations thereof. The computer software comprises a program code for performing the method according to the second aspect as such or according any of the preceding firs to ninth implementation forms of the second aspect.

These and other aspects of the invention will be apparent from the embodiment(s) described below.

BRIEF DISCRIPTION OF FIGURES

In the following possible embodiments of an apparatus and a method for providing a random early detection in a packet switched network according to the first, second, third and fourth aspects of the present invention are described with reference to the enclosed figures.

Fig. 1   shows a block diagram of a possible implementation of a random early detection apparatus according to the first aspect of the present invention;

Fig. 2   shows a flow chart of a possible implementation of a method for providing a random early detection in a packet switched network according to the second aspect of the present invention;

Fig. 3   shows a diagram illustrating an average queue size, AQS, of a queue under random data traffic as provided by a conventional random early detection mechanism in comparison to a random early detection mechanism as provided by the apparatus and the method according to the present invention.

DETAILED DESCRIPTION OF EMBODIMENTS

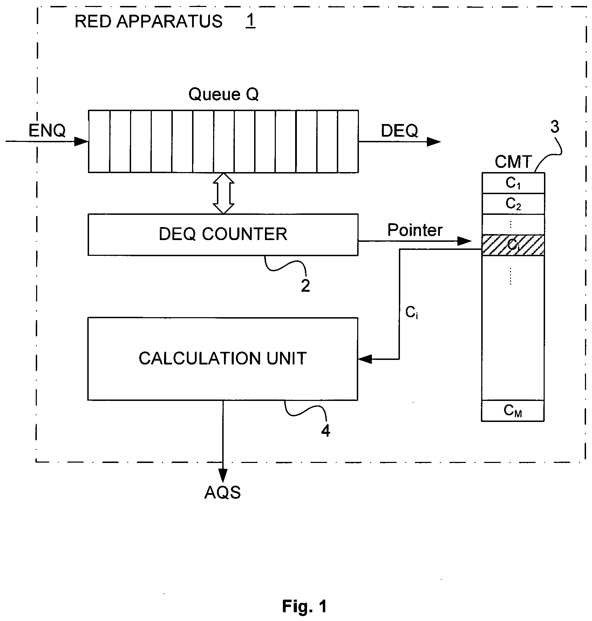

Fig. 1 shows a possible implementation of an apparatus 1 for providing a random early detection, RED, in a packet switched network. The apparatus 1 comprises in the shown implementation a queue, Q, in which data packets can be enqueued (ENQ) and from which data packets can be dequeued (DEQ). The apparatus 1 for providing a random early detection in the packet switched network further comprises a dequeue counter 2 which is incremented upon each dequeue of a data packet from the queue, Q, and which is reset upon each enqueue of a data packet into the queue, Q.

A queue is a particular kind of abstract data type or collection in which the entities in the collection are kept in order. Taking the FIFO queue as an example, the principal (or only) operations on the collection are the addition of entities to the rear terminal position, known as enqueue, and removal of entities from the front terminal position, known as dequeue. This makes the queue a First-In-First-Out (FIFO) data structure.

As can be seen in fig. 1 the apparatus 1 for providing a random early detection in a packet switched network comprises in the shown implementation a coefficient memory table, CMT, stored in a memory 3, wherein the coefficient memory table, CMT, stores a predetermined number, M, of decay coefficients, C, as illustrated in fig. 1.

The apparatus 1 for providing a random early detection, RED, in a packet switched network further comprises a calculation unit 4. The calculation unit 4 is adapted to calculate upon each enqueue of a data packet in the queue, Q, an average queue size, AQS, of the respective queue, Q, depending on a decay coefficient, C, read from a memory address of that coefficient memory table, CMT, to which said dequeue counter 2 points before it is reset. The storage size of the queue, Q, i.e. the number of data packets which can be enqueued in the respective queue of the apparatus 1 can vary depending on the application of the apparatus 1. Further, the data packets stored in a queue, Q, of the apparatus 1 can also have a different data packet size and can comprise data packets of different types and/or data protocols. The apparatus 1 for providing a random early detection, RED, in a packet switched network can form part of a more complex apparatus or machine such as a router in a packet switched network. Each port of such a router can have different queues, Q, wherein each queue can be assigned in a possible implementation to an input data stream coming for example from a client. Such a client can be connected via a link to a port of the respective router comprising the apparatus 1 for providing a random early detection in the packet switched network as shown in fig. 1. In a possible implementation each client can have its own queue, Q, within the apparatus 1. In a possible implementation the calculation unit 4 can output the calculated average queue size, AQS, of the respective queue, Q, for further processing.

In a further possible implementation of the apparatus 1 for providing a random early detection in a packet switched network the calculation unit 4 is further adapted to compare the calculated average queue size, AQS, of the respective queue, Q, with a predetermined maximum threshold value and a predetermined minimum threshold value. In a possible implementation the maximum threshold value as well as the minimum threshold value is adaptable for different applications of the apparatus 1. In a possible implementation the calculation unit 4 can drop a received data packet for the respective queue, Q, if the calculated average queue size, AQS, exceeds the maximum threshold value. On the contrary, the calculation unit does enqueue a received data packet into the respective queue, Q, if the calculated average queue size, AQS, is lower than the minimum threshold value. In a further possible implementation the calculation unit is adapted to drop the received data packet randomly if the calculated average queue size, AQS, is between the minimum threshold value and the maximum threshold value. In a possible specific implementation of the apparatus 1 for providing a random early detection of a packet switched network according to the first aspect of the present invention the calculation unit 4 is adapted to calculate the average queue size, AQS, also called a next average queue size, NEXT AQS, as follows:

$$\texttt{NEXT AQS = [Curr AQS - Queue Size Diff] x C + Queue Size Diff,}$$

wherein Curr AQS is the current average queue size, AQS,
wherein Queue Size Diff is the queue size difference,
wherein Queue Size Diff = (Prev Queue Size - Curr Queue Size)/2,
wherein Prev Queue Size is the previously calculated queue size of the respective queue, Q,
Curr Queue Size is the currently calculated queue size of the respective queue, Q,
C is a decay coefficient read from the coefficient memory table,
CMT, depending on the pointer value of the dequeue counter 2 of the respective queue, Q.

The decay coefficient, C, stored in the memory 3 can be in a possible implementation precalculated decay coefficients of an exponential decay function stored in the coefficient memory table, CMT. In a possible implementation the decay functions, C, stored in the memory 3 within the coefficient memory table, CMT, are precalculated and can be configurable. In a possible embodiment the calculation unit 4 of the apparatus 1 is adapted to calculate in advance the decay coefficients, C, of the exponential decay function stored in the memory 3 of the apparatus 1 as follows:

$$\texttt{x[i+1]=x[i]x(N-W)/N}$$

$$\texttt{C[i+1]=(x[i+1]-x[0])/x[0]}$$

wherein x[0] is an arbitrary number, N, W are arbitrary numbers (W<N) and i is a variable.
In a possible exemplary implementation the values are such as follows:

x[0] is set to 100,
W is set to 1,
N is set to 256.

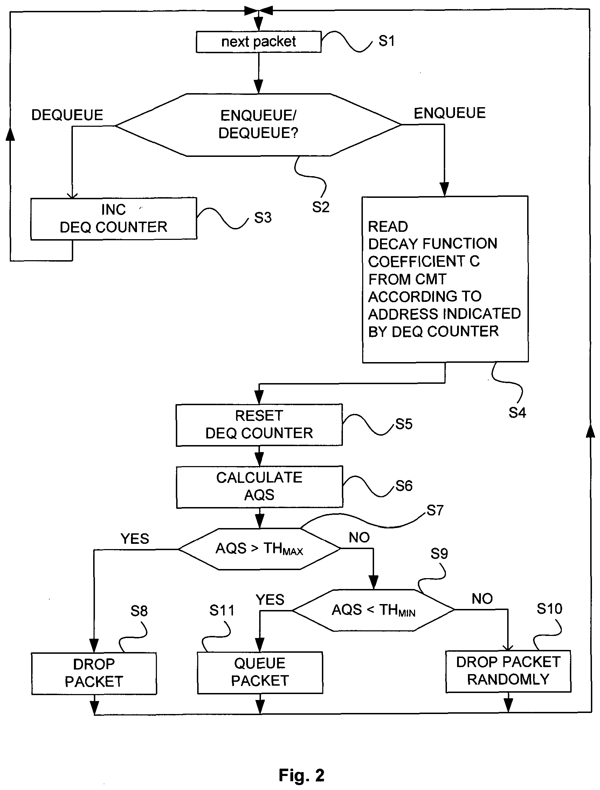

Fig. 2 shows a flow chart of a possible implementation of a method for providing a random early detection, RED, in a packet switched network according to the second aspect of the present invention.
As can be seen in fig. 2 in step S1 a next data packet is to be processed with the respective queue, Q. In a further step S2 it is decided whether the data packet has to be enqueued in the respective queue, Q, or has to be dequeued from the respective queue, Q. If the data packet is dequeued, the dequeue counter 2 of the RED apparatus 1 is incremented in step S3 as shown in fig. 2. On the other hand, if the data packet is enqueued into the respective queue, Q, a decay coefficient (also known as a decay function coefficient), C, is read from the coefficient memory table, CMT, according to an address indicated by the dequeue counter value in step S4 as shown in fig. 2. After having read the decay coefficient from the coefficient memory table, CMT, in step S4 the dequeue counter 2 of the apparatus 1 is reset in step S5. In step S6 the average queue size, AQS, of the respective queue, Q, is calculated. Further, in a possible implementation the calculation equation is as follows:

$$\texttt{NEXT AQS = [Curr AQS - Queue Size Diff] x C + Queue Size Diff,}$$

wherein NEXT AQS is the average queue size, AQS, currently being calculated,
wherein Curr AQS is the current average queue size, AQS,
wherein Queue Size Diff is the queue size difference,
wherein Queue Size Diff = (Prev Queue Size - Curr Queue Size)/2,
wherein Prev Queue Size is the previously calculated queue size of the respective queue, Q,
Curr Queue Size is the currently calculated queue size and
C is a decay coefficient read from the coefficient memory table, CMT, depending on the pointer value of the dequeue counter 2 of the respective queue, Q, in step S4.

The performing of steps S5 and S6 does not have the sequence requirement, they may be performed in parallel, or one after the other. Only as an example the step S5 is performed before the step S6 in Fig. 2.
In a further step S7 the calculated average queue size, AQS, is compared with a predetermined maximum threshold value, $TH_{MAX}$, and the data packet is dropped in step S8 if the average queue size, AQS, exceeds the predetermined maximum threshold value. If the calculated average queue size, AQS, of the respective queue Q is smaller than the maximum threshold value $TH_{max}$ the calculated average queue size, AQS, is compared in step S9 with the minimum threshold value $TH_{min}$. If the calculated average queue size, AQS, exceeds the minimum threshold value $TH_{min}$, i.e. lies in a range between the minimum threshold value and the maximum threshold value the received data packet is dropped randomly in step S10. On the contrary, if the calculated average queue size, AQS, is also lower than the minimum threshold value $TH_{min}$ the data packet is enqueued in step S11 as shown in fig. 2.

The calculation mechanism as shown in the implementation of fig. 2 does not only perform iteration for enqueues, i.e. input data packets, but also takes into consideration the dequeues of data packets (output packets). Accordingly, the calculation mechanism shown in fig. 2 does not simply add iterations for dequeues, thus doubling the number of calculations and the bandwidth needed to read the current average queue size and queue size values. To avoid this penalty the calculation method as shown in the implementation of fig. 2 performs the calculation only for enqueues but the effect of the number of dequeues is approximated using the coefficient memory table, CMT. The method according to the present invention uses a dequeue counter 2 that is incremented per each dequeue and which is reset in step S5 when an enqueue is encountered. This dequeue counter 2 expresses the number of dequeues since the last enqueue of a data packet in the queue Q. If an enqueue is encountered a coefficient, C, is read from the coefficient memory table CMT. The coefficient memory table CMT can be based on an exponential decay function wherein the decay coefficients C are precalculated, i.e. calculated once in advance. Each decay coefficient, C, is stored at a memory address of the memory 3 as shown in fig. 1. The value of the dequeue counter 2 operates as a pointer for selecting a memory address where the decay function coefficiency is stored. The number M of the decay coefficients, C, which are stored in the memory 3 can vary. For example, the number, M, of the decay coefficients, C, stored in the memory 3 can comprise 1000 exponential decay coefficients, C. Upon each reset performed in step S5 the dequeue counter 2 is set back to the first coefficient, $C1$, stored in the coefficient memory table, CMT, of the memory 3. Upon each dequeue of a data packet from the respective queue, Q, the dequeue counter 2 is incremented in step S3 and points to the next memory address where the next coefficients, C, is stored. For example, if ten dequeue operations are encountered in a row, the dequeue counter 2 is incremented ten times and points to the tenth coefficient $C_{10}$ stored in the coefficient memory table, CMT. With the method as shown in fig. 2 a random early detection, RED, is performed to avoid traffic data congestion. The calculation of the average queue size, AQS, according to the method of the present invention as shown in the implementation of fig. 2 takes into account an input function of the data but also an output function. In considering both, input and output function the method according to the present invention results in a better average queue size overall. This can be achieved while keeping the calculation overhead small and by continuing to perform the calculation on the received data packets only. The determined average queue size, AQS, does enhance the ability of the apparatus 1 to predict data congestion and results in a better data congestion avoidance in the packet switched network.

According to another embodiment the method shown in Fig. 2 can be implemented in digital electronic circuitry, or in computer hardware, firmware, computer software, or in combinations thereof. The computer software comprises a program code for performing the method as shown in Fig. 2.

According to another embodiment the present invention, an alternative apparatus for providing a random early detection in a packet switched network is provided. The apparatus may comprise a processor for performing the method as shown in Fig. 2.

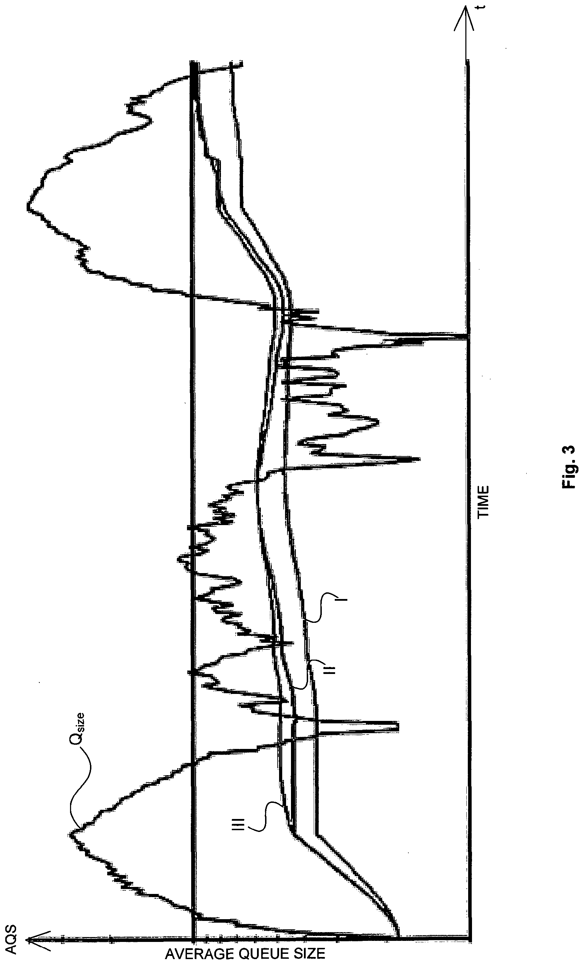

Fig. 3 shows a diagram for illustrating the calculated average queue size, AQS, under random data traffic over time. As can be seen in fig. 3 the method for providing a random early detection, RED, in a packet switched network according to the present invention does show better accuracy and tracking for the average queue size, AQS. Curve I illustrates a conventional RED mechanism wherein the average queue size, AQS, is only calculated for enqueues. The second curve II is the calculated average queue size, AQS, calculated by the method according to the present invention which calculates the average queue size for enqueues with an approximation for dequeues. The third curve III shows an optimal calculation for both, enqueue and dequeue of data packets. As can be seen from fig. 3 the calculation of the average queue size as performed by the present invention (curve II) is more accurate than the calculation of the average queue size with the conventional method for random early detection (curve I) since its curve is much closer to the optimal curve III.

Flat lines indicate time periods without enqueue thus the average queue size, AQS, remains at the last enqueue value. The average queue size, AQS, value may continue to rise even during dequeue only periods because the queue size is greater than the average queue size, AQS. The average queue size, AQS, may continue to descend even during an enqueue only period because the queue size is smaller than the average queue size, AQS.

In a possible implementation of the method according to the present invention the received data packets are dropped randomly with a different drop probability per traffic priority if the calculated average queue size, AQS, is between the minimum threshold value and the maximum threshold value. In this implementation a weighted random early detection, WRED, is performed. Data traffic having a higher traffic priority has less probability for data packets to be dropped by the mechanism.

In a further possible implementation the response to a packet drop a protocol, such as a TCP protocol, can decrease a transmission rate so that traffic congestion is avoided. The method for providing a random early detection, RED, in a packet switched network can be used in a wide range of applications and networks, in particular in the internet in collaboration with the TCP protocol. The improved method for providing a random early detection in a packet switched network according to the present invention can increase the bandwidth efficiency of the network by preserving the properties of congestion avoidance. The method for providing a random early detection in a packet switched network can be used by any router or other communication equipment that uses random early detection to improve the performance of the respective router or communication equipment.

**Claims**

1. An apparatus (1) for providing a random early detection, RED, in a packet switched network,
   said apparatus (1) comprising:

   - a dequeue counter (2) which is incremented upon each dequeue of a data packet from a queue, Q, and which is reset upon each enqueue of a data packet into said queue, Q;
   - a coefficient memory table, CMT, which stores plurality of decay coefficients, C; and
   - a calculation unit (4) which is adapted to calculate, upon each enqueue of a data packet in said queue, Q, an average queue size, AQS, of said queue, Q, depending on a decay coefficient, C, wherein the decay coefficient is read from a memory address of said coefficient memory table, CMT, to which said dequeue counter (2) points before said dequeue counter (2) is reset.

2. The apparatus according to claim 1,
   wherein said calculation unit (4) is adapted to compare the calculated average queue size, AQS, of said queue, Q, with a maximum threshold value and a minimum threshold value to drop a received data packet if the average queue size, AQS, exceeds the maximum threshold value,
   to enqueue the received data packet if the average queue size, AQS, is lower than the minimum threshold value and to drop the received data packet randomly if the calculated average queue size, AQS, is between the minimum threshold value and the maximum threshold value.

3. The apparatus according to claim 2,
   wherein the received data packets are dropped randomly with a different drop probability per traffic priority if the calculated average queue size, AQS, is between the minimum threshold value and the maximum threshold value.

4. The apparatus according to claim 1, wherein the calculation unit (4) is adapted to calculate the average queue size of said queue, Q, as follows:

   ```
   [Curr AQS – Queue Size Diff] x C + Queue Size Diff,
   ```

   wherein Curr AQS is the current average queue size, AQS, wherein
   Queue Size Diff is a queue size difference,
   wherein

   ```
   Queue Size Diff = (Prev Queue Size – Curr Queue Size)/2,
   ```

   wherein Prev Queue Size is the previously calculated queue size of said queue, Q,
   Curr Queue Size is the currently calculated queue size of said queue, Q,
   C is the decay coefficient read from the coefficient memory table, CMT, depending on the pointer value of the dequeue counter of said queue, Q.

5. The apparatus according to claim 1,
   wherein the decay coefficients, C, are decay coefficients of an exponential decay function stored in said coefficient memory table, CMT.

**6.** The apparatus according to claim 5,
wherein said calculation unit (4) is adapted to calculate in advance the decay coefficients, C, of said exponential decay function as follows:

$$x[i+1]=x[i] \times (N-W)/N$$

$$C[i+1]=(x[i+1]-x[0])/x[0]$$

wherein x[0] is an arbitrary number, N, W are arbitrary numbers (W<N) and i is a variable.

**7.** The apparatus according to claim 6,
wherein
x[0] is set to 100,
W is set to 1,
N is set to 256.

**8.** A method for providing a random early detection, RED, in a packet switched network comprising the steps of:

- incrementing (S3) a dequeue counter (2) upon each dequeue of a data packet from a queue, Q, and resetting said dequeue counter (2) upon each enqueue of a data packet in said queue, Q; and
- calculating (S6), upon each enqueue of a data packet in said queue, Q, an average queue size, AQS, of said queue, Q, depending on a decay coefficient, C, wherein the decay coefficient is read (S4) from a memory address of a coefficient memory table, CMT, to which said dequeue counter (2) points before the dequeue counter (2) is reset.

**9.** The method according to claim 8, wherein the method further comprises comparing (S7, S9) said calculated average queue size, AQS, of said queue, Q, with a maximum threshold value and a minimum threshold value;
dropping (S8) a received data packet if the calculated average queue size, AQS, exceeds the maximum threshold value,
enqueuing (S11) the received data packet if the calculated average queue size, AQS, is lower than the minimum threshold value and
dropping randomly (S10) the received data packet if the calculated average queue size, AQS, is between the minimum threshold value and the maximum threshold value.

**10.** The method according to claim 9, wherein the dropping randomly (S10) the received data packet comprises dropped randomly the received data packets (S10) with a different drop probability per traffic priority.

**11.** The method according to claims 8 to 10,
wherein calculating (S6) the average queue size, AQS, of said queue, Q, depending on a decay coefficient, C, as follows:

$$[Curr\ AQS - Queue\ Size\ Diff] \times C + Queue\ Size\ Diff,$$

wherein Curr AQS is the current average queue size, AQS, wherein
Queue Size Diff is the queue size difference,
wherein

$$Queue\ Size\ Diff = (Prev\ Queue\ Size - Curr\ Queue\ Size)/2,$$

wherein Prev Queue Size is the previously calculated queue size of said queue, Q,
Curr Queue Size is the currently calculated queue size and C is the decay coefficient read from the coefficient memory table, CMT, depending on the pointer value of the dequeue counter (2) of said queue, Q.

12. The method according to claims 8 to 11,
    wherein the decay coefficients, C, are decay coefficients of an exponential decay function stored in said coefficient memory table, CMT.

13. The method according to any of the claims 8 to 12, wherein the method further comprises calculating in advance the decay coefficient, C, of said exponential decay function as follows:

$$x[i+1]=x[i]\,x\,(N-W)/N$$

$$C[i+1]=(x[i+1]-x[0])/x[0]$$

wherein x[0] is an arbitrary number,
wherein N, W are arbitrary numbers (W<N) and i is a variable.

14. An apparatus for providing a random early detection, RED, in a packet switched network, said apparatus comprising a processor to perform the method according to one of claims 8 - 13.

15. A packet switched network comprising an apparatus according to one of the preceding claims 1 - 7 and 14.

**Patentansprüche**

1. Vorrichtung (1) zur Bereitstellung einer zufälligen frühen Detektion (Random Early Detection, RED) in einem paketvermittelten Netzwerk, die Vorrichtung (1) umfassend:

   - einen Auslagerungszähler (2), der bei jeder Auslagerung eines Datenpakets aus einer Warteschlange Q erhöht wird und bei jeder Einreihung eines Datenpakets in die Warteschlange Q zurückgesetzt wird;
   - ein Koeffizientenspeichertabelle (Coefficient Memory Table, CMT), die eine Vielzahl von Abnahmekoeffizienten C speichert; und
   - eine Berechnungseinheit (4), die dazu vorgesehen ist, bei jeder Einreihung eines Datenpakets in die Warteschlange Q eine durchschnittliche Warteschlangengröße (Average Queue Size, AQS) der Warteschlange Q in Abhängigkeit von einem Abnahmekoeffizienten C zu berechnen, wobei der Abnahmekoeffizient aus einer Speicheradresse der Koeffizientenspeichertabelle CMT ausgelesen wird, auf die der Auslagerungszähler (2) zeigt, bevor der Auslagerungszähler (2) zurückgesetzt wird.

2. Vorrichtung nach Anspruch 1,
   wobei die Berechnungseinheit (4) dazu vorgesehen ist, die berechnete durchschnittliche Warteschlangengröße AQS der Warteschlange Q mit einem maximalen Schwellenwert und einem minimalen Schwellenwert zu vergleichen, um ein empfangenes Datenpaket zu verwerfen, wenn die durchschnittliche Warteschlangengröße AQS größer als der maximale Schwellenwert ist,
   das empfangene Datenpaket in die Warteschlange einzureihen, wenn die durchschnittliche Warteschlangengröße AQS kleiner als der minimale Schwellenwert ist, und das empfangene Datenpaket zufällig zu verwerfen, wenn die berechnete durchschnittliche Warteschlangengröße AQS zwischen dem minimalen Schwellenwert und dem maximalen Schwellenwert liegt.

3. Vorrichtung nach Anspruch 2,
   wobei die empfangenen Datenpakete mit einer unterschiedlichen Verwerfungswahrscheinlichkeit pro Verkehrspriorität zufällig verworfen werden, wenn die berechnete durchschnittliche Warteschlangengröße AQS zwischen dem minimalen Schwellenwert und dem maximalen Schwellenwert liegt.

4. Vorrichtung nach Anspruch 1,
   wobei die Berechnungseinheit (4) dazu vorgesehen ist, die durchschnittliche Warteschlangengröße der Warteschlange Q wie folgt zu berechnen:

$$[\text{Curr AQS} - \text{Queue Size Diff}] \times C + \text{Queue Size Diff,}$$

wobei Curr AQS die aktuelle durchschnittliche Warteschlangengröße AQS ist,
wobei
Queue Size Diff ein Warteschlangengrößenunterschied ist,
wobei

$$\text{Queue Size Diff} = (\text{Prev Queue Size} - \text{Curr Queue Size})/2,$$

wobei Prev Queue Size die zuvor berechnete Warteschlangengröße der Warteschlange Q ist, Curr Queue Size die aktuell berechnete Warteschlangengröße der Warteschlange Q ist,
C der Abnahmekoeffizient ist, der aus der Koeffizientenspeichertabelle CMT ausgelesen wird, in Abhängigkeit von dem Zeigerwert des Auslagerungszählers der Warteschlange Q.

5. Vorrichtung nach Anspruch 1,
wobei die Abnahmekoeffizienten C Abnahmekoeffizienten einer exponentiellen Abnahmefunktion sind, die in der Koeffizientenspeichertabelle CMT gespeichert ist.

6. Vorrichtung nach Anspruch 5,
wobei die Berechnungseinheit (4) dazu vorgesehen ist, die Abnahmekoeffizienten C der exponentiellen Abnahmefunktion wie folgt im Voraus zu berechnen:

$$x[i+1] = x[i] \times (N-W)/N$$

$$C[i+1] = (x[i+1] - x[0]) / x[0]$$

wobei $x[0]$ eine beliebige Zahl ist, N, W beliebige Zahlen ($W<N$) sind und i eine Variable ist.

7. Vorrichtung nach Anspruch 6,
wobei
$x[0]$ auf 100 gesetzt ist,
W auf 1 gesetzt ist,
N auf 256 gesetzt ist.

8. Verfahren zur Bereitstellung einer zufälligen frühen Detektion RED in einem paketvermittelten Netzwerk, umfassend die Schritte:

- Erhöhen (S3) eines Auslagerungszählers (2) bei jeder Auslagerung eines Datenpakets aus einer Warteschlange Q und Zurücksetzen des Auslagerungszählers (2) bei jeder Einreihung eines Datenpakets in die Warteschlange Q; und
- Berechnen (S6), bei jeder Einreihung eines Datenpakets in die Warteschlange Q, einer durchschnittlichen Warteschlangengröße AQS der Warteschlange Q in Abhängigkeit von einem Abnahmekoeffizienten C, wobei der Abnahmekoeffizient aus einer Speicheradresse einer Koeffizientenspeichertabelle CMT ausgelesen (S4) wird, auf die der Auslagerungszähler (2) zeigt, bevor der Auslagerungszähler (2) zurückgesetzt wird.

9. Verfahren nach Anspruch 8, wobei das Verfahren ferner das Vergleichen (S7, S9) der berechneten durchschnittlichen Warteschlangengröße AQS der Warteschlange Q mit einem maximalen Schwellenwert und einem minimalen Schwellenwert umfasst;
Verwerfen (S8) eines empfangenen Datenpakets, wenn die berechnete durchschnittliche Warteschlangengröße AQS den maximalen Schwellenwert überschreitet,
Einreihen (S11) des empfangenen Datenpakets in die Warteschlange, wenn die berechnete durchschnittliche Warteschlangengröße AQS niedriger als der minimale Schwellenwert ist, und
zufälliges Verwerfen (S10) des empfangenen Datenpakets, wenn die berechnete durchschnittliche Warteschlangengröße AQS zwischen dem minimalen Schwellenwert und dem maximalen Schwellenwert liegt.

10. Verfahren nach Anspruch 9, wobei das zufällige Verwerfen (S10) des empfangenen Datenpakets das zufällige Verwerfen der empfangenen Datenpakete (S10) mit einer unterschiedlichen Verwerfungswahrscheinlichkeit nach Verkehrspriorität umfasst.

11. Verfahren nach den Ansprüchen 8 bis 10,
wobei das Berechnen (S6) der durchschnittlichen Warteschlangengröße AQS der Warteschlange Q wie folgt von einem Abnahmekoeffizienten C abhängt:

$$[\text{Curr AQS} - \text{Queue Size Diff}] \times C + \text{Queue Size Diff},$$

wobei Curr AQS die aktuelle durchschnittliche Warteschlangengröße AQS ist, wobei Queue Size Diff der Warteschlangengrößenunterschied ist,
wobei
Queue Size Diff = (Prev Queue Size - Curr Queue Size)/2, wobei Prev Queue Size die zuvor berechnete Warteschlangengröße der Warteschlange Q ist,
Curr Queue Size die aktuell berechnete Warteschlangengröße ist und C der Abnahmekoeffizient ist, der aus der Koeffizientenspeichertabelle CMT ausgelesen wird, in Abhängigkeit von dem Zeigerwert des Auslagerungszählers (2) der Warteschlange Q.

12. Verfahren nach den Ansprüchen 8 bis 11,
wobei die Abnahmekoeffizienten C Abnahmekoeffizienten einer exponentiellen Abnahmefunktion sind, die in der Koeffizientenspeichertabelle CMT gespeichert ist.

13. Verfahren nach einem der Ansprüche 8 bis 12, wobei das Verfahren ferner das Berechnen im Voraus des Abnahmekoeffizienten C der exponentiellen Abnahmefunktion wie folgt umfasst:

$$x[i+1] = x[i] \times (N-W) / N$$

$$C[i+1] = (x[i+1] - x[0]) / x[0]$$

wobei x[0] eine beliebige Zahl ist,
wobei N, W beliebige Zahlen (W<N) sind und i eine Variable ist.

14. Vorrichtung zur Bereitstellung einer zufälligen frühen Detektion RED in einem paketvermittelten Netzwerk, wobei die Vorrichtung einen Prozessor zum Durchführen des Verfahrens nach einem der Ansprüche 8 bis 13 umfasst.

15. Paketvermitteltes Netzwerk, umfassend eine Vorrichtung nach einem der vorhergehenden Ansprüche 1 bis 7 und 14.

**Revendications**

1. Appareil (1) pour fournir une détection aléatoire précoce, (RED) dans un réseau à commutation de paquets, ledit appareil (1) comprenant :

- un compteur de retrait de file d'attente (2) qui est incrémenté lors de chaque retrait de file d'attente d'un paquet de données d'une file d'attente (Q) et qui est réinitialisé lors de chaque mise en file d'attente d'un paquet de données dans ladite file d'attente (Q) ;
- une table de mémoire de coefficient (CMT) qui stocke une pluralité de coefficients de décroissance (C) ; et
- une unité de calcul (4) qui est conçue pour calculer, lors de chaque mise en file d'attente d'un paquet de données dans ladite file d'attente (Q), une taille de file d'attente moyenne (AQS) de ladite file d'attente (Q) en fonction d'un coefficient de décroissance (C), dans lequel le coefficient de décroissance est lu à partir d'une adresse mémoire de ladite table de mémoire de coefficient (CMT) que ledit compteur de retrait de file d'attente (2) indique avant que ledit compteur de retrait (2) ne soit réinitialisé.

2. Appareil selon la revendication 1,
dans lequel ladite unité des calcul (4) est conçue pour comparer la taille de file d'attente moyenne calculée (AQS) de ladite file d'attente (Q) avec une valeur de seuil maximale et une valeur de seuil minimale pour abandonner un paquet de données reçu si la taille de file d'attente moyenne (AQS) dépasse la valeur de seuil maximale, pour mettre en file d'attente le paquet de données reçu si la taille de file d'attente moyenne (AQS) est inférieure à la valeur de seuil minimale et pour abandonner le paquet de données reçu de manière aléatoire si la taille de file d'attente moyenne calculée (AQS) est entre la valeur de seuil minimale et la valeur de seuil maximale.

3. Appareil selon la revendication 2,
dans lequel les paquets de données reçus sont abandonnés de manière aléatoire avec une probabilité d'abandon différente par priorité de trafic si la taille de file d'attente moyenne calculée (AQS) est entre la valeur de seuil minimale et la valeur de seuil maximale.

4. Appareil selon la revendication 1,
dans lequel l'unité de calcul (4) est conçue pour calculer la taille de file d'attente moyenne (AQS) de ladite file d'attente (Q) comme suit :

[AQS actuelle - Diff de taille de file d'attente] x C + Diff de taille de file d'attente,
dans lequel AQS actuelle est la taille de file d'attente moyenne (AQS) actuelle,
dans lequel Diff de taille de file d'attente est une différence de taille de file d'attente,
dans lequel

$$\text{Diff de taille de file d'attente} = (\text{précédente taille de file d'attente - taille de file d'attente actuelle})/2,$$

dans lequel précédente taille de file d'attente est la taille de file d'attente calculée auparavant de ladite file d'attente (Q),
taille de file d'attente actuelle est la taille de file d'attente calculée à présent de ladite file d'attente (Q),
C est le coefficient de décroissance lu à partir de la table de mémoire de coefficient (CMT) en fonction de la valeur de pointeur du compteur de retrait de file d'attente de ladite file d'attente (Q).

5. Appareil selon la revendication 1,
dans lequel les coefficients de décroissance (C) sont des coefficients de décroissance d'une fonction de décroissance exponentielle stockée dans ladite table de mémoire de coefficient (CMT).

6. Appareil selon la revendication 5,
dans lequel ladite unité de calcul (4) est conçue pour calculer à l'avance les coefficients de décroissance (C) de ladite fonction de décroissance exponentielle comme suit :

$$x[i + 1] = x[i] \ x \ (N - W)/N$$

$$C[i + 1] = (x[i + 1] - x[0]/x[0]$$

dans lequel x[0] est un nombre arbitraire, N, W sont des nombres arbitraires (W < N) et i est une variable.

7. Appareil selon la revendication 6,
dans lequel
x[0] est fixé à 100,
X est fixé à 1,
N est fixé à 256.

8. Procédé pour fournir une détection aléatoire précoce, (RED) dans un réseau à commutation de paquets comprenant les étapes consistant :

- à incrémenter (S3) un compteur de retrait de file d'attente (2) lors de chaque retrait de file d'attente d'un paquet de données d'une file d'attente (Q) et à réinitialiser ledit compteur de retrait de file d'attente (2) lors de chaque mise en file d'attente d'un paquet de données dans ladite file d'attente (Q) ; et
- à calculer, lors de chaque mise en file d'attente d'un paquet de données dans ladite file d'attente (Q), une taille de file d'attente moyenne (AQS) de ladite file d'attente (Q) en fonction d'un coefficient de décroissance (C), dans lequel le coefficient de décroissance est lu (S4) à partir d'une adresse mémoire d'une table de mémoire de coefficient (CMT) que ledit compteur de retrait de file d'attente (2) indique avant que le compteur de retrait (2) ne soit réinitialisé.

9. Procédé selon la revendication 8, dans lequel le procédé consiste en outre à comparer (S7, S9) ladite taille de file d'attente moyenne calculée (AQS) de ladite file d'attente (Q) avec une valeur de seuil maximale et une valeur de seuil minimale ;
à abandonner (S8) un paquet de données reçu si la taille de file d'attente moyenne calculée (AQS) dépasse la valeur de seuil maximale,
à mettre en file d'attente (S11) le paquet de données reçu si la taille de file d'attente moyenne calculée (AQS) est inférieure à la valeur de seuil minimale et
à abandonner (S10) le paquet de données reçu de manière aléatoire si la taille de file d'attente moyenne calculée (AQS) est entre la valeur de seuil minimale et la valeur de seuil maximale.

10. Procédé selon la revendication 9, dans lequel l'abandon aléatoire (S10) du paquet de données reçu consiste à abandonner de manière aléatoire les paquets de données reçus (S10) avec une probabilité de décroissance différente par priorité de trafic.

11. Procédé selon les revendications 8 à 10,
dans lequel le calcul (S6) de la taille de file d'attente moyenne (AQS) de ladite file d'attente (Q) en fonction d'un coefficient de décroissance (C) est comme suit :

$$[AQS\ actuelle - Diff\ de\ taille\ de\ file\ d'attente] \times C + Diff\ de\ taille\ de\ file\ d'attente,$$

dans lequel AQS actuelle est la taille de file d'attente moyenne (AQS) actuelle,
dans lequel Diff de taille de file d'attente est une différence de taille de file d'attente, dans lequel

$$Diff\ de\ taille\ de\ file\ d'attente = (précédente\ taille\ de\ file\ d'attente - taille\ de\ file\ d'attente\ actuelle)/2,$$

dans lequel précédente taille de file d'attente est la taille de file d'attente calculée auparavant de ladite file d'attente (Q),
taille de file d'attente actuelle est la taille de file d'attente calculée à présent de ladite file d'attente (Q),
C est le coefficient de décroissance lu à partir de la table de mémoire de coefficient (CMT) en fonction de la valeur de pointeur du compteur de retrait de file d'attente (2) de ladite file d'attente (Q).

12. Procédé selon les revendications 8 à 11,
dans lequel les coefficients de décroissance (C) sont des coefficients de décroissance d'une fonction de décroissance exponentielle stockée dans ladite table de mémoire de coefficient (CMT).

13. Procédé selon l'une quelconque des revendications 8 à 12, dans lequel le procédé consiste en outre à calculer à l'avance le coefficient de décroissance (C) de ladite fonction de décroissance exponentielle comme suit :

$$x[i + 1] = x[i] \times (N - W)/N$$

$$C[i + 1] = (x[i + 1] - x[0]/x[0]$$

dans lequel x[0] est un nombre arbitraire,

dans lequel N, W sont des nombres arbitraires (W < N) et i est une variable.

14. Appareil pour fournir une détection aléatoire précoce, (RED) dans un réseau à commutation de paquets, ledit appareil comprenant un processeur pour réaliser le procédé selon l'une des revendications 8 à 13.

15. Réseau à commutation de paquets comprenant un appareil selon l'une des revendications 1 à 7 et 14.

RED APPARATUS  1

Queue Q

ENQ

DEQ

3

CMT

$C_1$

$C_2$

DEQ COUNTER

Pointer

$C_i$

2

$C_i$

CALCULATION UNIT

4

$C_M$

AQS

**Fig. 1**

**Fig. 2**

**Fig. 3**

EP 2 783 489 B1

**EP 2 783 489 B1**

**Patent documents cited in the description**

- US 7558197 B1